(19) Europäisches Patentamt
European Patent Office
Office européen des brevets

(11) **EP 2 509 432 B1**

(12) **EUROPEAN PATENT SPECIFICATION**

(45) Date of publication and mention
of the grant of the patent:
**27.03.2019 Bulletin 2019/13**

(21) Application number: **10836600.6**

(22) Date of filing: **08.12.2010**

(51) Int Cl.:
*A23D 7/005* (2006.01)  *A23D 9/007* (2006.01)
*A23L 33/20* (2016.01)

(86) International application number:
**PCT/US2010/059431**

(87) International publication number:
**WO 2011/071999 (16.06.2011 Gazette 2011/24)**

(54) **HIGH DIGLYCERIDE STRUCTURING COMPOSITION AND PRODUCTS AND METHODS USING THE SAME**

STRUKTURIERUNGSZUSAMMENSETZUNG MIT HOHEM DIGLYCERIDANTEIL SOWIE PRODUKTE UND VERFAHREN DAMIT

COMPOSITION STRUCTURANTE À TENEUR ÉLEVÉE EN DIGLYCÉRIDES ET PRODUITS ET PROCÉDÉS L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.12.2009 US 633633**

(43) Date of publication of application:
**17.10.2012 Bulletin 2012/42**

(73) Proprietor: **Caravan Ingredients Inc.**
**Lenexa, Kansas 66215 (US)**

(72) Inventors:
• **DOUCET, Jim, R.**
**Lenexa, KS 66215 (US)**
• **ROBERTSON, Jim, M.**
**Kansas City, MO 64146 (US)**

(74) Representative: **Uexküll & Stolberg**
**Partnerschaft von**
**Patent- und Rechtsanwälten mbB**
**Beselerstraße 4**
**22607 Hamburg (DE)**

(56) References cited:
**EP-A1- 1 929 877      EP-A1- 1 982 597**
**JP-A- 2004 083 902      KR-B1- 100 514 017**
**US-A- 3 658 555      US-A- 5 952 518**
**US-A1- 2007 148 312      US-B1- 6 337 414**

**Description**

BACKGROUND OF THE INVENTION

Field of the Invention

The present invention is broadly concerned with novel structuring compositions comprising high levels of diglycerides, high $\beta'$ crystal levels, and small average crystallite sizes as well as food products containing, and methods of using, those compositions.

Description of the Prior Art

US2007/0148312 discloses emulsifier composition used in shortenings based on mono and diglycerides, wherein the amount of monoglycerides is of 10%. Fats and oils are important in the preparation and manufacturing of a variety of foodstuff. They aid in lubricating, structuring, tenderizing, and aerating food products, as well as acting as a moisture barrier during shelf life and also as a heating medium for frying. A number of food products such as bread, cakes, pastries, and icings include structured fats such as traditional shortening or margarine, which impart desirable plasticity and organoleptic characteristics to these products. Some oils such as palm oil or cottonseed oil contain appreciable amounts of triglycerides based on tri- or disaturates (stearins), which are higher melting than the other triglycerides, and provide structuring properties resulting in a semi-solid nature. Most oils, such as canola, soybean, sunflower, high oleic sunflower, mid oleic sunflower, high oleic canola, high oleic soybean do not have such structuring triglycerides and as a result remain liquid at ambient temperatures and below.

After refining, edible fat and oils contain primarily triglycerides, with residual levels of free fatty acids, phospholipids, tocopherols, and mono- and diglycerides. Triglycerides in fats and oils can be modified via fractionation, interesterification, and or hydrogenation to provide structuring properties. Fractionation of fats (usually palm) is performed by cooling the oil slowly to allow the stearin components to crystallize followed by separation via filter press. The crystallized triglyceride fraction (stearin) is captured in the press whereas the liquid fraction (olein) passes through. The resulting stearin fraction is predominately higher-melting crystallized triglycerides, and thus has a higher solid (saturated) fat content and melting profile than the starting oil. The melting properties of the stearin fraction can be increased further by subjecting it to a second fractionation step. Blending of the stearin and olein fractions at different ratios can allow a large range of products to be produced.

Interesterification is a process whereby the fatty acids of a particular fat or blend of fats are redistributed or randomized with respect to location on the triglyceride molecule. The composition or profile of the fatty acids does not alter due to this process. This process can be carried out chemically (e.g., with sodium methoxide) or enzymatically, with enzymatic processes being preferred. As with fractionation, the resulting product has different melting and crystallizing properties from the starting oil or fat.

Hydrogenation is a process that results in the chemical reduction of unsaturated fatty acids to the corresponding saturated fatty acid, resulting in a solid or semi-solid fat. Saturated fatty acids also have increased oxidative stability resulting in products having a longer shelf-life. In some cases, the hydrogenation is allowed to proceed fully or to the highest degree where most of the unsaturated bonds are reduced to the saturated form, resulting in fully hydrogenated fats or oils. However, partial hydrogenation generally results in more organoleptically pleasing fats, while maintaining oxidative stability. In view of these desirable properties, partial hydrogenation of fats and oils, such as soybean, cottonseed, corn, canola, and sunflower has historically been used to convert liquid fats and oils to solid or semi-solid forms for foodstuffs. Partially hydrogenated fats were used in the production of many foodstuffs including chemically leavened and yeast raised baked goods (i.e. crackers, cookies, cakes), shortenings, margarines, fried foods (i.e. sliced or shredded potatoes, meat goods), imitation cheeses, peanut butter, icings, and the like. However, an undesirable side effect of the partial hydrogenation process is the isomerization of the remaining unsaturated fatty acids into the *trans* form, with typical shortenings employed in baked or fried goods containing *trans* isomers in the range of 15% to 40%, based upon the total weight of the fat taken as 100% by weight. Numerous clinical studies have reported on the negative health consequences of consuming *trans* fatty acids. Some countries have banned *trans* fatty acids from foods, while others, such as the United States, now require *trans* fat content to be included in the nutrition information. As a result, many food manufacturers have entirely removed *trans* fats from their formulations.

The most common approach has been to replace the partially hydrogenated oil with palm oil and/or palm fractions in a variety of baked goods to structure dough for cutting, sheeting, and extruding, or in plastic shortenings, and laminating rolls in margarines, imitation cheeses, and confections (i.e. fillings, icings). However, such blends often contain a high level of bad (i.e., saturated) fat, with many blends containing 48% saturated fat and above on a total fat basis. Palm oil is also low in good (i.e., polyunsaturated) fat. In addition to the health consequences, palm-based fats have a tendency to structure more slowly when compared to partially hydrogenated fats, and over time such formed structures experience a phenomenon referred to as "post hardening," which results in a brittle and less plastic structure. Palm oil can also be characterized as having a fruity flavor, which is undesirable in many applications. Finally, foodstuffs containing palm oil are also reported in having a waxy or starchy mouth feel, which can be attributed to the slow melt down properties of the high melting constituents of the oil. More recently, attempts have been made to replace partially hydrogenated oils with fully refined non-hydrogenated, non-palm containing liquid oil or oil blends. Fully refined oils such as soybean, canola, corn, sunflower, and cottonseed contain predominantly polyunsaturated fatty acids, and from a health perspective contain a very favorable polyunsaturated to saturated fat ratio. Many of the newer oils such as high oleic canola or low linolenic soybean oil also provide increased oxidative stability naturally without hydrogenation. Unfortunately, such oils have no structuring properties and are unsuitable by themselves to replace partially hydrogenated oils.

Other approaches to structuring fats include blending the liquid oils (i.e., soybean) with palm and/or palm fractions. Another approach is to replace partially hydrogenated oils with interesterified fats comprised of liquid oils and fully hydrogenated oils. Yet another approach is to blend fully refined liquid oils with a minor portion of fully hydrogenated oils such as fully hydrogenated cottonseed oil. Although these approaches achieve some degree of structuring, while avoiding *trans* fats, they still suffer from poor crystallization and structuring behavior, along with other drawbacks such as saturated fat content and poor organoleptic properties. They still contain high levels of saturated or hydrogenated fats, and only marginally improve the ratio of good to bad fats.

Another related problem in the preparation and shelf life of food products is fat migration. Fat migration is a phenomenon wherein certain fats or oils permeate or become mobile within a food product, which can result in destabilization of the product. Mobility of fat is related to such factors as degree of crystallinity, crystal form (e.g., alpha; beta-prime or β'; or beta or β) and size distribution of crystals in the fat. In shortening, a beta-prime crystal is desired because it imparts a smooth, creamy texture, contributing to a fine texture in baked products. Alpha crystals are very fine, needle-shaped crystals that are unstable and quickly convert to more stable beta-prime crystals. Beta crystals are much coarser, grainy crystals that are undesirable for many applications. Most fats and oils exhibit polymorphic behavior, and exist in more than one form (polymorph) or crystal structure. Mechanical or thermal tempering can be used to create shortening with beta-prime crystal structure. In thermal tempering (controlled heating and subsequent cooling) of fat, a portion of the liquid lipid species becomes supersaturated to form nuclei. Nucleation leads to the formation of crystals. The cooling rate determines crystal size, number, and polymorphism, and influences mixed crystal formation. Crystals have different stabilities at various temperatures and if possible will convert from a meta-stable form to the stable form. Tempering provides the activation energy necessary for alpha crystals to transition to the beta-prime form. For some oils like soybean or canola, this transition proceeds very rapidly (i.e., in seconds). For other oils, such as cottonseed or palm, this transition occurs much slower and can be measured in minutes. Under certain conditions, the beta-prime crystal will transition further into the beta crystal form. Crystal structure can be determined by several analytical methods including powder X-ray diffraction that characterizes the crystal polymorphs by wide angle and crystallite size by small angle.

Mono- and diglycerides can be used as crystal modifiers for fats and oils. They can be produced from a wide range of fats or oils including fully hydrogenated soybean or palm oil/palm fraction, partially hydrogenated soybean oil, and/ or fully refined soybean oil, palm oil/palm fraction, sunflower oil, cottonseed oil, canola oil, coconut oil, and/or any combination thereof or the fatty acids derived therefrom. Mono- and diglycerides are generally produced by reacting a triglyceride or fatty acid with glycerol in the presence of an alkaline metal catalyst to form a distribution of monoglycerides, diglycerides, and triglycerides with minor levels of glycerol, all in equilibrium. Typical monoglyceride content will range from 40-60 weight %. Unlike the natural distribution of fatty acids found in the source oil, the distribution of fatty acids found on the resulting monoglycerides, diglycerides, and triglycerides are randomized or redistributed. Molecular distillation can be used to further process the monoglyceride fraction from the remaining fractions (diglycerides and triglycerides). This process results in a monoglyceride content of greater than 90 weight %, and a residual diglyceride content of approximately 5 weight %.

As such, mono- and diglycerides have been added to fats in many applications like compound coatings and peanut butter to facilitate rapid crystal growth, fostering larger mean size, and reducing set time. However, existing shortenings contain monoglycerides that exhibit strong polymorphic tendencies toward the β-crystal state (β >> β'), resulting in the formation of the undesirable large, coarse crystals of the beta form. US 2007/148312 A1 discloses a glycerides composition comprising at least 65% w/w and up to 80% w/w diglyceride and 11% or 10% w/w monoglyceride.

Thus, prior attempts at shortening systems have failed to achieve a simultaneous decrease in bad fats, while maintaining adequate structuring properties found in partially hydrogenated fat systems. Existing methods and shortening systems have also failed to achieve a high content of stable, beta-prime crystal structure desirable for bread, cakes, pastries, icings, and the like,

SUMMARY OF THE INVENTION

The present invention provides a method of reducing levels of unhealthy fats in a food while maintaining the structure of the food. The method comprises replacing a quantity of the unhealthy fats that would otherwise be present in the food with a structuring composition other than a margarine, where the structuring composition comprises a fat system which includes a mixture of glycerides. The structuring composition comprises at least 50% by weight diglycerides and from 1 to 5 % by weight monoglycerides, based upon the total weight of glycerides in the composition taken as 100% by weight. In addition, the fat system comprises at least 30% by weight β' crystals, based upon the total weight of crystals present in the fat system taken as 100% by weight.

An edible product is also provided in the present invention. The product comprises a non-hydrogenated vegetable oil and a structuring composition other than a margarine, where the structuring composition comprises a fat system which includes a mixture of glycerides. The structuring composition comprises at least 50% by weight diglycerides and from 1 to 5 % by weight monoglycerides, based upon the total weight of glycerides in the composition taken as 100% by weight. In addition, the fat system comprises at least 30% by weight β' crystals, based upon the total weight of crystals present in the fat system taken as 100% by weight.

In an alternative embodiment, the present invention provides a method of reducing levels of unhealthy fats in a food while maintaining the structure of the food. The method comprises replacing a quantity of the unhealthy fats that would otherwise be present in the food with a structuring composition comprising a fat system which includes a mixture of glycerides. The structuring composition comprises at least 50% by weight diglycerides and from 1 to 5 % by weight monoglycerides, based upon the total weight of glycerides in the composition taken as 100% by weight. In addition, the fat system comprises from 75% to 100% by weight β' crystals, based upon the total weight of crystals present in the fat system taken as 100% by weight.

An edible product is also provided in the present invention. The product comprises a non-hydrogenated vegetable oil and a structuring composition comprising a fat system which includes a mixture of glycerides. The structuring composition comprises at least 50% by weight diglycerides and from 1 to 5 % by weight monoglycerides, based upon the total weight of glycerides in the composition taken as 100% by weight. In addition, the fat system comprises from 75% to 100% by weight β' crystals, based upon the total weight of crystals present in the fat system taken as 100% by weight.

Finally, the invention also provides a method of forming a structuring composition, where the method comprises heating a mixture to a temperature of from 60°C to 72°C (preferably from 64°C to 68°C, and more preferably 66C) to form a fat system. The mixture comprises:

a non-hydrogenated vegetable oil; and

a glyceride composition comprising at least 35% by weight diglycerides and from 1 to 5 % by weight monoglycerides, based upon the total weight of the glyceride composition taken as 100% by weight.

The fat system is then cooled at a rate of from 35°C/minute to 45°C/minute (preferably 40°C/minute) to a temperature of from 26C to 28C (preferably 27C) to initiate crystal formation in the fat system and yield the structuring composition. The structuring system is preferably a shortening or margarine having the properties described herein. The method preferably further comprises tempering the structuring composition for a time period of from 40 hours to 60 hours (preferably 48 hours) at a temperature of from 25°C to 27°C (preferably 26C).

## DETAILED DESCRIPTION OF THE PREFERRED EMBODIMENTS

## INVENTIVE GLYCERIDE MIXTURE

### 1. Preparation of Inventive Glyceride Mixture

The glyceride mixture is prepared by glycerolysis or esterification of a fat (preferably a saturated fat) or fatty acid(s). Suitable fats are vegetable oils and include those selected from the group consisting of fully hydrogenated soybean oil, fully hydrogenated palm oil, fully hydrogenated palm stearin, fully hydrogenated coconut oil, fully hydrogenated canola oil, fully hydrogenated cottonseed oil, fully hydrogenated high erucic acid rapeseed oil, and mixtures of the foregoing.

The reaction is preferably carried out by heating the fat or fatty acid in the presence of glycerol and a catalyst to a temperature of from 225C to 265°C. Suitable catalysts include those selected from the group consisting of hydroxides of alkali metals, alkaline earth metals, $Zn^{2+}$, and $Sn^{2+}$; carboxylate salts of the foregoing; and glyceroxide of the foregoing. After the reactants reach equilibrium, they are neutralized with molar equivalents of any food-grade, heat-stable acid (preferably phosphoric acid in order to inactivate the catalyst. The excess glycerol is then removed by conventional processes, and the remaining fraction can be treated to a process such as molecular distillation in order to further concentrate the diglyceride content to a monoglyceride to diglyceride ratio of from 0.05:1 to 0.2:1, and preferably 0.1:1.

*2. Components and Properties of Inventive Glyceride Mixture*

Regardless of the preparation method, the inventive glyceride mixture is preferably an elevated diglyceride mixture, although monoglycerides and triglycerides will also be present. The monoglycerides are present in the mixture at levels of from 1% to 5% by weight, based upon the total weight of the mixture taken as 100% by weight.

The diglycerides are present in the mixture at levels of at least 35% by weight, preferably at least 50% by weight, more preferably at least 60% by weight, and even more preferably from 60% to 80% by weight, based upon the total weight of the mixture taken as 100% by weight.

The triglyceride levels in the glyceride mixture are preferably minimized. Generally, triglycerides will be present at levels of less than 40% by weight, preferably less than 35% by weight, and more preferably less than 30% by weight, based upon the total weight of the mixture taken as 100% by weight.

The free glycerol levels in the mixture are also preferably minimized. Generally, glycerol will be present at levels of less than 5% by weight, preferably less than 3% by weight, and more preferably less than 1% by weight, based upon the total weight of the mixture taken as 100% by weight.

The inventive glyceride mixture possesses a fatty acid profile that primarily comprises saturated fatty acids. More specifically, the mixture preferably comprises at least 80% by weight saturated fatty acids, preferably at least 90% by weight saturated fatty acids, and more preferably at least 95% by weight saturated fatty acids, based upon the total weight of all fatty acids in the mixture taken as 100% by weight. The saturated fatty acids present in the mixture will generally be $C_{14}$ to $C_{22}$ saturated fatty acids, and more preferably $C_{16}$ to $C_{18}$ saturated fatty acids. In a particularly preferred embodiment, the mixture comprises palmitic acid and stearic acid, the combined weight of which falls within the ranges described above.

Unsaturated fatty acids (e.g., oleic acid and elaidic acid) will be present in the glyceride mixture at a level of less than 20% by weight unsaturated fatty acids, preferably less than 10% by weight unsaturated fatty acids, and preferably less than 5% by weight unsaturated fatty acids, based upon the total weight of all fatty acids in the mixture taken as 100% by weight.

Furthermore, the glyceride mixture preferably has an iodine value of less than 20 wijs, preferably less than 10 wijs, more preferably less than 5 wijs, and even more preferably from 0.1 wijs to 3 wijs. As used herein, iodine value is determined by AOCS Official Method Cd 1-25.

The glyceride mixture will also have an acid value of from 0.05 mg KOH/gram to 3 mg KOH/gram, preferably from 0.1 mg KOH/gram to 1.5 mg KOH/gram, and more preferably from 0.1 mg KOH/gram to 0.5 mg KOH/gram.

INVENTIVE STRUCTURING COMPOSITION

A structuring composition can be formed using the above-described glyceride mixture. Specifically, the structuring composition would comprise a fat system that comprises, or even consists essentially of, the glyceride mixture. The use of the glyceride mixture in the fat system allows one to reduce and/or avoid the use of unhealthy fats (e.g., *trans* fats, saturated fats) by replacing at least a portion of those unhealthy fats with the glyceride mixture.

Fat systems including the inventive glyceride mixture have high β' crystal levels and small average crystallite sizes. This provides a fat system that retains the structuring, taste, and texture properties of conventional fats, but without the unhealthy attributes of conventional fats. The fat system in a product other than a margarine will include at least 30% by weight β' crystals, preferably at least 40% by weight β' crystals, more preferably at least 50% by weight β' crystals, and even more preferably from 60% to 100% by weight β' crystals, based upon the total weight of crystals in the fat system taken as 100% by weight. The fat system in a margarine according to the invention will include at least 41% by weight β' crystals, preferably at least 50% by weight β' crystals, more preferably at least 60% by weight β' crystals, and even more preferably from 75% to 100% by weight β' crystals, based upon the total weight of crystals in the fat system taken as 100% by weight. The % by weight of β' crystals in a sample is determined as defined in Example 3. Finally, the average (of three XRD scans) crystallite size of the fat system will be less than 400 Å, preferably less than 350 Å, and more preferably from 150 Å to 300 Å.

*1. Shortening Comprising Inventive Glyceride Mixture*

A shortening is a fat with the ability to lubricate, weaken, and/or shorten the textural properties of a baked product. The glyceride mixture described herein can be used to prepare a shortening by combining it with an edible oil (preferably a nonhydrogenated vegetable oil). This is preferably accomplished by heating the glyceride mixture to a temperature sufficient to create a molten state (e.g., preferably from 62°C to 68°C) and then adding it directly into the edible oil, which has been pre-heated to a temperature of from 60°C to 66C. This mixing is preferably carried out in the presence of mechanical agitation and nitrogen blanketing. Blending should be continued after combining the glyceride mixture with the edible oil in order to allow complete solubilization and to yield a uniform composition. A typical blending time is from 30 minutes to 50 minutes, and preferably from 35 minutes to 45 minutes.

The inventive shortening composition can then be used directly during manufacturing of the particular foodstuff in which it will be used, or it can be maintained under these conditions until needed. Upon use, the shortening can then be added directly during manufacturing of the foodstuff at this temperature. Alternatively, it may be cooled prior to use in the foodstuff either gradually (facilitated by a jacketed vessel) or rapidly (using some form of heat exchanger) to a temperature of from 18°C to 32°C to initiate the formation of dispersed crystals in the oil prior to adding to other ingredients of the foodstuff. Alternately it may be packaged for later use.

In another embodiment, the glyceride mixture can be combined with other ingredients that will be present in the foodstuff and subsequently solubilized into the edible oil phase *in situ* during processing, provided a temperature of at least 60°C is achieved during solubilization.

Depending upon the particular shortening, the glyceride mixture will typically be present at levels of from 3% by weight to 35% by weight, preferably from 5% by weight to 23% by weight, and more preferably from 5% to 17% by weight, based upon the total weight of the shortening taken as 100% by weight. The edible oil will typically be present at levels of from 77% by weight to 97% by weight, and preferably from 83% by weight to 95% by weight, based upon the total weight of the shortening taken as 100% by weight. Typical edible oils for use in the shortenings include those selected from the group consisting of soybean oil, canola oil, corn oil, sunflower oil, safflower oil, and mid- and high-oleic IP oils.

In one embodiment, the shortening consists essentially of the glyceride mixture and edible oil. In another embodiment, in addition to the glyceride mixture and edible oil, the shortening may include one or more of the following ingredients: propylene glycol esters of fatty acids, sodium stearoyl lactylate, antioxidant or antioxidant systems (e.g., TBHQ, BHA, BHT, propyl gallate, ascorbyl palmitate), and chelating components (e.g., citric acid or EDTA). The content of these additional ingredients will depend upon the application but typically antioxidants such as TBHQ , BHT, or ascorbyl palmitate can be added up to 200 ppm, applied in a carrier such as propylene glycol along with chelating agents such as citric acid or EDTA.

Further, the inventive shortening system can be used as a delivery system for other emulsifiers. Such emulsifiers can be blended into the inventive shortening by means of mechanical mixing and may include lecithin, propylene glycol esters of fatty acids, sodium stearoyl lactylate, diacetyl tartaric acid esters of monoglycerides, and lactic acid esters of mono- and diglycerides.

The above process can be used for making a plastic shortening as well as for making a molten shortening or a high-ratio cake shortening. It will be appreciated that the levels of the glyceride mixture and edible oil utilized will be adjusted, depending upon the type of shortening that is desired. Furthermore, an emulsifier is added to the ingredients in order to make the high-ratio cake shortening. Table A shows the different glyceride mixture quantities, while Table B-D shows the fatty acid profile ranges of the different types of shortening according to the invention.

Table A

| TYPE OF SHORTENING | % BY WEIGHT OF GLYCERIDE MIXTURE[A] | % BY WEIGHT EDIBLE OIL |
|---|---|---|
| Plastic | from 16% to 20% | from 80% to 84% |
| Molten #1 | from 10% to 14% | from 86% to 90% |
| Molten #2 | 5% | 95% |
| High-Ratio Cake | 15% | 74%[B] |
| [A] % by weight based upon the total weight of the shortening taken as 100% by weight. [B] Further includes 4% distilled monoglycerides and 7% propylene glycol ester. | | |

Table B - Plastic Shortening

| | INVENTIVE SHORTENING | ALL-PURPOSE RBD[A] PALM SHORTENING |
|---|---|---|
| Saturated Fatty Acids | from 21 % to 25%[B] | 50%[B] |
| Monounsaturated Fatty Acids | from 47% to 50% | 39% |
| Polyunsaturated Fatty Acids | from 27% to 29% | 11% |
| *Trans* Fatty Acids | less than 1.0% | less than 1.0% |
| [A] Refined bleached deodorized. [B] % by weight, based upon the total weight of all fatty acids in the composition taken as 100% by weight. | | |

Table C - Molten Shortening #1

|  | INVENTIVE SHORTENING | 60:40 PALM:CANOLA |
|---|---|---|
| Saturated Fatty Acids | from 16% to 20% | 33% |
| Monounsaturated Fatty Acids | from 51% to 53% | 47% |
| Polyunsaturated Fatty Acids | from 29% to 31% | 20% |
| *Trans* Fatty Acids | less than 1.0% | less than 1.0% |

Table D - Molten Shortening #2

|  | INVENTIVE SHORTENING | RBD PALM OIL |
|---|---|---|
| Saturated Fatty Acids | 19% | 50% |
| Monounsaturated Fatty Acids | 22% | 39% |
| Polyunsaturated Fatty Acids | 59% | 11% |
| *Trans* Fatty Acids | less than 1.0% | less than 1.0% |

Table E - High-Ratio Cake Shortening

|  | INVENTIVE SHORTENING | PALM SHORTENING |
|---|---|---|
| Saturated Fatty Acids | from 25% to 30% | 53% |
| Monounsaturated Fatty Acids | from 43% to 47% | 36% |
| Polyunsaturated Fatty Acids | from 17% to 25% | 10% |
| *Trans* Fatty Acids | less than 1.0% | less than 1.0% |

*2. Margarine Comprising Inventive Glyceride Mixture*

The inventive margarine is produced by simultaneously preparing two phases: (i) an aqueous phase; and (ii) an inventive fat phase providing less than 0.5 grams of *trans* fat per serving and a reduced saturated fatty acid content per serving as compared to prior art margarines.

The aqueous phase is preferably prepared by the physical blending or admixing of the components (water, salt, sucrose, polysorbate 60, and citric acid), preferably with mechanical agitation. The mixture is lightly heated until all components are solvated by the water and mixed until homogeneity is achieved.

The inventive fat phase is preferably prepared by the physical blending or admixing of the components (RBD palm oil, palm stearin, non-hydrogenated vegetable oil, and glyceride mixture), preferably with mechanical agitation. Prior to this mixing, the glyceride mixture is preferably heated to an elevated temperature sufficient to liquefy the material (e.g., from 62°C to 68°C) and then blended directly with the oil and other ingredients, which have been pre-heated to a temperature of from 60°C to 66°C. The resulting blend is continuously mixed until homogeneity is achieved.

After homogeneity has been achieved with both phases, the aqueous phase is admixed with the inventive fat phase under agitation to achieve a water-in-oil emulsion. The homogeneous emulsion is pasteurized (e.g., at 73°C for 16 seconds) before rapidly cooling the emulsion to temperatures of from 21°C to 27C by passing the emulsion through a scraped surface heat exchanger or similar mechanism. This rapid cooling initiates the crystallization of the fat phase, which provides the necessary structure to entrain the liquid oil present and keep the aqueous phase evenly dispersed throughout the continuous fat phase. The crystallized margarine is then packaged into polylined carton stock and tempered at a temperature of from 21°C to 27C for a time period of from 48 hours to 72 hours to achieve the desired plasticity. After tempering of the margarine is achieved, it can be added to the desired foodstuff, or stored for later use.

The glyceride mixture will be present at levels of from 9% by weight to 20% by weight, and preferably from 13% by weight to 15% by weight, based upon the total weight of the fat phase taken as 100% by weight. The edible oil will be present at levels of from 80% by weight to 91% by weight, and preferably from 85% by weight to 87% by weight, based upon the total weight of the fat phase taken as 100% by weight. Examples of suitable edible oils are similar to those discussed above with respect to shortenings. Furthermore, the additional ingredients discussed above with respect to the shortenings can also be utilized in the inventive margarines.

Table F shows the fatty acid profile of the inventive margarine as compared to a prior art margarine.

Table F - Margarine

|  | INVENTIVE MARGARINE | PALM MARGARINE |
|---|---|---|
| Saturated Fatty Acids | from 38% to 42%[A] | 52% |
| Monounsaturated Fatty Acids | from 39% to 43% | 38% |
| Polyunsaturated Fatty Acids | from 16% to 20% | 9% |
| *Trans* Fatty Acids | less than 1.0% | less than 1.0% |
| [A] % by weight, based upon the total weight of all fatty acids in the composition taken as 100% by weight. | | |

## 3. Foods Comprising the Inventive Shortening or Margarine

It will be appreciated that the above-described shortenings and margarines can be incorporated into any food product that would normally include a fat. The inventive shortenings and margarines preferably entirely replace the fat that would normally be used, but it is feasible that the normally-used fat would only be partially replaced, if desired. The food item would be prepared following conventional preparation methods, but using the inventive shortening or margarine to provide the fat system.

Examples of foods that can be used with the inventive structuring compositions include those selected from the group consisting of baked goods, including pastries (e.g., puff pastries, Danishes, donuts), doughs (e.g., for cookies, pie crusts), cakes, and muffins. Other examples include those selected from the group consisting of imitation cheese, icings, frozen potato products (e.g., French Fries, formed potato products like tater tots), popping oils, and/or other foods requiring a fat to provide structure, coating (e.g., moisture barrier, flavor carrier), and/or heat transfer medium (e.g., frying fats).

## EXAMPLES

The following examples set forth preferred methods in accordance with the invention. It is to be understood, however, that these examples are provided by way of illustration and nothing therein should be taken as a limitation upon the overall scope of the invention.

## EXAMPLE 1

Preparation of Inventive Mono- and Diglyceride A

In this procedure, 91.4% by weight fully hydrogenated soybean oil (obtained from ADM) and 8.6% by weight glycerol (obtained from Cargill) were combined in a reactor vessel and heated to 245°C. A catalytic amount, 0.01% by weight, of calcium hydroxide was added to initiate the glycerolysis reaction. The reactants were allowed to reach equilibrium before neutralization with molar equivalents (0.01% by weight) of 85% phosphoric acid. The excess glycerin was removed from the product by wiped or falling film evaporation before using a molecular distillation process to concentrate the diglyceride. The resulting product had the attributes described in Table 1 and the fatty acid profile set forth in Table 2.

Table 1

| PROPERTY | VALUE |
|---|---|
| Iodine Value | 1.2[A] |
| Acid Value (mg KOH/gram) | 0.36 |
| Total Monoglyceride | 3.6%[B] |
| Total Diglyceride | 68.4%[B] |
| Free Glycerol | 0.11%[B] |
| [A] Unit of measurement is wijs; iodine value determined by AOCS Official Method Cd 1-25. [B] Percentage by weight, based upon the total glycerides in the composition taken as 100% by weight. | |

Table 2

| FATTY ACID | % BY WEIGHT[A] |
|---|---|
| Myristic Acid (C14:0) | trace |
| Palmitic Acid (C16:0) | 10.8% |
| Stearic Acid (C18:0) | 88.1% |
| Oleic Acid (C18:1) | 0.2% |
| Elaidic Acid (C18:1t) | 0.9% |
| [A] Percentage by weight, based upon the total weight of all fatty acids other than myristic acid being taken as 100% by weight. | |

As shown in this example, the diglyceride content was conserved to a weight greater than 60%.

EXAMPLE 2

Preparation of Inventive Mono- and Diglyceride B

In this procedure, 91.1% by weight fully hydrogenated palm stearin (obtained from Loders Croklaan) and 8.9% by weight glycerol (obtained from Cargill) were combined in a reactor vessel and heated to 245°C. A catalytic amount, 0.01% by weight, of calcium hydroxide was added to initiate the glycerolysis reaction. The reactants were allowed to reach equilibrium before neutralization with molar equivalents (0.01% by weight) of 85% phosphoric acid. The excess glycerin was removed from the product by wiped or falling film evaporation before using a molecular distillation process to concentrate the diglyceride. The resulting product had the attributes described in Table 3 and the fatty acid profile set forth in Table 4.

Table 3

| PROPERTY | VALUE |
|---|---|
| Iodine Value | 1.4[A] |
| Acid Value (mg KOH/gram) | 0.32 |
| Total Monoglyceride | 3.8%[B] |
| Total Diglyceride | 67.8%[B] |
| Free Glycerol | 0.11%[B] |
| [A] Unit of measurement is wijs; iodine value determined by AOCS Official Method Cd 1-25.<br>[B] Percentage by weight, based upon the total fatty acids in the composition taken as 100% by weight. | |

Table 4

| FATTY ACID | % BY WEIGHT[A] |
|---|---|
| Myristic Acid (C14:0) | trace |
| Palmitic Acid (C16:0) | 56.2% |
| Stearic Acid (C18:0) | 43.3% |
| Oleic Acid (C18:1) | 0.2% |
| Elaidic Acid (C18:1t) | 0.3% |
| [A] Percentage by weight, based upon the total weight of all fatty acids other than myristic acid being taken as 100% by weight. | |

As shown in this example, the diglyceride content was conserved to a weight greater than 60%.

EXAMPLE 3

Preparation of Inventive Plastic Shortening

The term "plastic" is applied to fats that are readily mixed or worked, or that are of spreadable consistency. A shortening is a fat with the ability to lubricate, weaken, and/or shorten the textural properties of a baked product. Plastic shortenings are semisolid. They are generally packaged in poly-lined cartons, and they must provide the required performance characteristics of storage stability, creamy consistency over a specified temperature range, and the ability to incorporate liquid oil and air.

In this procedure, a mixture of 84.0% by weight fully refined soybean oil (obtained from ADM) and 16.0% by weight of the inventive mono- and diglyceride prepared in Example 2 were heated to 66C in a steam jacketed kettle and allowed to reach homogeneity. Nitrogen was added to the inventive shortening while being pumped with a high pressure piston pump through a two-barrel, scraped surface heat exchanger (Armfield model FT 25) to rapidly (40°C/minute) cool the material to a temperature of 27C to initiate the formation of dispersed crystals in the oil. The crystallized semi-solid mass was passed through a pin worker to facilitate even heat transfer and nitrogen dispersion. The semi-solid mass containing nitrogen gas cells was then passed through an extrusion valve to allow precise control of back pressure during the packaging of the product into poly-lined cartons. The product was tempered for 48 hours in a controlled temperature environment (at 26°C).

After the tempering process, the shortening was characterized to determine several properties.

*1. Crystal Type and Size*

The crystal type and size were determined using a Rigaku Multiflex Automated theta-theta Powder X-ray diffractometer. A sample was spread over a glass X-ray slide at 8°C. Two scans were performed per sample. The first scan was in the small angle region SAXS (0° to 8°), and the second scan was carried out in the wide angle region WAXS (15° - 25°). The diffractometer was operated at 40 kV and 44 mA, with a Copper X-ray tube, and MIDI Jade 6.5 software was used for data analysis. This procedure results in peaks at 3.8 Å and/or 4.2 Å, which is indicative of the β' crystal level, as well as a peak at 4.6 Å, which is indicative of the β crystal level. The height (in cm) of each of these peaks is measured. For the β' peaks, the larger of these two peaks is used. If the peaks are the same height, then either peak can be used. These heights are used in the following formula to determine the % β' crystals of the sample:

$$\% \text{ ß'} = \left[ \frac{(\text{Height of Larger of 3.8 Å or 4.2 Å Peaks})}{(\text{Height of Larger of 3.8 Å or 4.2 Å Peaks}) + (\text{Height of 4.6 Å Peak})} \right] * 100$$

2.

*Firmness*

The firmness of the inventive shortening was determined used a TA-XT2 Texture Analyzer (by Stable Micro System). The trigger setting was "Auto 5.0 grams." A conical probe was penetrated into a shortening sample at a rate of 1 mm/sec., for a total depth of 35 mm, while measuring the normal force in grams. The probe was then retracted at a rate of 2 mm/sec. The positive peak value was the "firmness" of the sample.

*3. Solid Fat Content*

The solid fat content was determined by following AOCS Method Cd 16b-93, using a Bruker minispec pNMR.

*4. Viscoelastic Properties*

The viscoelastic or rheological properties were determined using an ATS Rheosystems Viscoanalyzer with a concentric cylinder with Peltier heating and cooling. The temperature setting was 70°C -27°C, using a rotational shear of 400/sec. The procedure included 30 minutes at a 27C isotherm, using an oscillatory strain of $4.5 \times 10^{-3}$ to observe the crystal network development.

The results for the above properties are set forth in Table 5.

Table 5

| Crystal Type and Size | % β' Crystals | 70.59 |
|---|---|---|
| | Average Crystallite Size (Å) | 176.33 |
| Firmness | Day 33 (g)[A] | 430.40 |
| Solid Fat Content | N10[B] | 16.75 |
| | N15 | 16.11 |
| | N20 | 15.27 |
| | N25 | 13.16 |
| | N30 | 9.43 |
| | N35 | 6.22 |
| Rheology | G' (Pa)[C] | 9,100.00 |
| | G" (Pa)[D] | 1,190.00 |
| | Phase Angle (°)[E] | 7.40 |

[A] Number of days since shortening was produced. The day of production is Day 0.

[B] "N" represents the temperature at which the samples were tested, thus demonstrating the melting profile of the sample, represented by the amount of solids present between 10°C and 35°C. This is also commonly referred to as the "N-line" rather than the solid fat content curve.

[C] G' is the shear storage modulus (also referred to as the "elastic modulus.")

[D] G" is the shear loss modulus (also referred to as the "viscous modulus.")

[E] Phase Angle is determined by the formula: $\delta = \tan^{-1}\left(\dfrac{G''}{G'}\right)$

The percentage of β' crystals and the average crystallite size is responsible for the entrapment of the large quantity of oil present in the formulation. This contributes to the relatively high firmness values for a blend containing such a small amount of solid fat. The viscoelastic properties further demonstrate the structuring capabilities of the mono- and diglyceride composition present in the blend.

EXAMPLE 4

Preparation of High-Ratio Cake Shortening

High-Ratio cake shortenings are shortenings specially designed to strengthen batters for cakes containing a higher level of sugar than flour. Such batters are susceptible to falling (collapsing) until the proteins coagulate and the starches reach gelatinization during the baking process. Typically, such shortenings will contain an emulsifier system consisting of mono- and diglycerides with propylene glycol esters, but may also include lecithin, sodium stearoyl lactylate, lactylated mono- and diglycerides, and/or polysorbate 60. Such shortenings must provide the required performance characteristics of storage stability, creamy consistency over a specified temperature range, and the ability to incorporate liquid oil and air.

The ingredients set forth in Table 6 were combined into a steam jacketed vessel where heating was applied with agitation and nitrogen blanketing to a temperature of 63°C. The ingredients were mixed thoroughly to insure even and complete solubilization of the emulsifiers. The inventive shortening composition along with nitrogen gas was pumped using a high pressure piston pump into a scrape surface heat exchanger consisting of two crystallizers. Cooling occurred rapidly in the heat exchanger, initiating the formation of dispersed crystals in the oil. The composition was then transferred to a pin worker unit where the semi solid mass was worked to facilitate even heat and nitrogen dispersion. The semi-solid mass containing nitrogen gas cells was passed through an extrusion valve to allow precise control of back pressure for the process followed by packaging into a poly-lined carton. The product was then tempered in a controlled temperature environment for a period of 48 hours before use.

Table 6

| INGREDIENT | % BY WEIGHT[A] |
|---|---|
| Fully Refined Soybean Oil | 77 |
| Mono-and Diglyceride Preparation of Example 2 | 13 |
| Propylene Glycol Esters of Fatty Acids | 8 |
| Sodium Stearoyl Lactylate | 2 |
| [A] Percentage by weight, based upon the total weight of all the ingredients taken as 100% by weight. | |

The resulting shortening demonstrated good firmness and plasticity. In addition, during creaming of the fat over the other cake ingredients, the inventive composition spread very uniformly over the surface of those ingredients.

EXAMPLE 5

Preparation of Inventive Molten Shortening A

Shortenings are utilized in the preparation of many foodstuffs and may be incorporated in a fluid state (non-crystallized) or semi-solid state (plastic) for purposes such as lubrication, shortening of texture, emulsification of liquids, frying, and/or aeration.

In this procedure, 85% by weight of fully refined soybean oil (obtained from ADM) and 15% by weight of the inventive mono- & diglyceride prepared in Example 2 were combined into a steam jacketed vessel where heating was applied with agitation and under nitrogen blanketing to a temperature of 63°C. The ingredients were mixed thoroughly to insure even and complete solubilization of the mono-and diglycerides and then maintained in this state until incorporation into the particular product, as described below.

EXAMPLE 6

Preparation of Inventive Molten Shortening B

In this procedure, 95% by weight of fully refined soybean oil (obtained from ADM) and 5% by weight of the inventive mono- & diglyceride prepared in Example 1 were combined into a steam jacketed vessel where heating was applied with agitation and under nitrogen blanketing to a temperature of 63°C. The ingredients were mixed thoroughly to insure even and complete solubilization of the mono-and diglycerides and then maintained in this state until incorporation into the particular product, as described below.

EXAMPLE 7

Preparation of Inventive Molten Shortening C

In this procedure, 88% by weight of fully refined soybean oil (obtained from ADM) and 12% by weight of the inventive mono- & diglyceride prepared in Example 2 were combined into a steam jacketed vessel where heating was applied with agitation and under nitrogen blanketing to a temperature of 63°C. The ingredients were mixed thoroughly to insure even and complete solubilization of the mono- and diglycerides and then maintained in this state until incorporation into the particular product, as described below.

EXAMPLE 8

Preparation of Roll-In Margarine

Roll-in margarines are commonly used in the production of puff pastry, Danish pastry, brioche, and croissants. The margarine must maintain several characteristics to remain functional. First, the margarine must retain its plasticity over the temperature range that will be experienced during the lamination process. Second, the rheological properties of the margarine must be equivalent to that of the dough at lamination (the process in which discrete layers of fat and dough are formed) temperatures. The melting temperature of the margarine should also be sufficiently high that the margarine is not incorporated into the dough during the lamination process and maintains its consistency during the proofing step. Finally, a β' crystal morphology must be maintained in order to provide small crystals that immobilize large amounts of liquid oil in the product.

The inventive margarine was produced by simultaneously preparing a fat phase and an aqueous phase, with the ingredients of each phase being set forth in Table 7. The fat phase was prepared by the physical blending, under agitation, of the RBD palm oil, palm stearin, canola oil, and the mono- and diglyceride A from Example 1. The blend was continuously mixed until homogeneity and a temperature of 66°C were achieved.

The aqueous phase was prepared by the physical blending, with mechanical agitation, of the water, salt, sucrose, potassium sorbate, and citric acid. The mixture was lightly heated until all components were solvated by the water and mixed until homogeneity was achieved.

Table 7

| INGREDIENT | % BY WEIGHT[A] |
|---|---|
| Fat Phase A | |
| RBD Palm Oil[B] | 20 |
| RBD Palm Stearin[C] | 14 |
| RBD Canola[D] | 34.5 |
| Mono-and Diglyceride A (prepared in Example 1) | 11.5 |
| | |
| Aqueous Phase B | |
| Water | 17.3925 |
| Salt | 1.5 |
| Sucrose | 1 |
| Potassium Sorbate | 0.1 |
| Citric Acid | 0.0075 |
| [A] Percentage by weight, based upon the total weight of all the ingredients in both the Fat Phase A and the Aqueous Phase B taken as 100% by weight. [B] Obtained from Loders Croklaan. [C] Obtained from Loders Croklaan. [D] Obtained from Cargill. | |

After homogeneity was achieved in both the aqueous phase and the fat phase, the aqueous phase was blended into the fat phase under agitation to achieve the desired water-in-oil emulsion. The homogeneous emulsion was pasteurized at 73°C for 16 seconds before being rapidly (40°C/minute) cooled through a scraped surface heat exchanger to a temperature of 27C. This cooling initiated crystallization of the fat phase, which provides the necessary structure to entrain the liquid oil present and keep the aqueous phase evenly dispersed throughout the continuous fat phase. The crystallized margarine was packaged into poly-lined cartons and tempered at approximately 26C for approximately 48 hours to achieve the desired plasticity.

After the tempering process, the fat in the margarine was characterized using the techniques described above in Example 3. The results are set forth in Table 8.

Table 8

| | | |
|---|---|---|
| Crystal Type and Size | % β' Crystals | 75.00 |
| | Average Crystallite Size (Å) | 259.16 |
| Firmness | Day 33 (g) | 1,486.52 |

(continued)

| | | |
|---|---|---|
| | N10 | 42.10 |
| | N15 | 36.90 |
| | N20 | 30.16 |
| | N25 | 25.45 |
| Solid Fat Content | N30 | 20.70 |
| | N35 | 17.22 |
| | G' (Pa) | 7,393.00 |
| | G" (Pa) | 3,151.00 |
| Rheology | Phase Angle (°) | 23.10 |

The percentage of β' crystals and the average crystallite size is responsible for the entrapment of the large quantity of oil present in the formulation. This contributes to the relatively high firmness values of the inventive product. The solid fat content was similar to a traditional roll-in margarine. The viscoelastic properties further demonstrated the structuring capabilities of the mono- and diglyceride composition present in the blend.

EXAMPLE 9

Preparation of Cookie Dough

All-purpose shortenings are incorporated into cookie dough to shorten the texture so that the finished products are sufficiently tender. During the mixture of the dough, there is competition for the flour surface between the aqueous phase and the fat. The aqueous phase interacts with the flour protein to create a gluten network that is cohesive and extensible. However, when the surface of the flour is coated with fat, absorption is reduced and a less cohesive gluten network is formed. In this sense, the fat serves to shorten the texture.

Cookies were prepared using the ingredients from Table 9.

Table 9

| INGREDIENT | GRAMS |
|---|---|
| Plastic Shortening Prepared in Example 3 | 64.00 |
| Granulated Sugar | 130.00 |
| Salt | 2.10 |
| Sodium Bicarbonate | 2.50 |
| 6.0% Dextrose Solution | 33.00 |
| Distilled Water | 16.00 |
| Flour | 225.00 |

The shortening prepared in Example 3, granulated sugar, salt, and sodium bicarbonate were combined and mixed in a 5-quart Hobart mixer with paddle attachment on speed 1 for 3 minutes. The bowl was scraped after each minute of mixing. The dextrose solution and distilled water were then added to the bowl and mixed on speed 1 for 1 minute. The bowl was scraped and mixing was continued for an additional 1 minute on speed 2. The flour was added to the bowl, and mixing was continued on speed 1 for two minutes. The mixing was stopped every 30 seconds to scrape down the bowl.

The dough was gently scraped down the bowl, and six portions of dough were placed on a lightly greased cookie sheet. The dough mounds were lightly flattened with the palm of a hand. Using gauge strips (0.635 cm) (0.25 inch), the dough was rolled to a thickness with one forward rolling pin stroke and one return stroke. The dough was cut with a cookie cutter, and the excess dough was discarded before removing cutter. The dough was weighed, followed by baking for 10 minutes at 204 °C (400 °F). The cookies were then removed from the oven and allowed to cool for 30 minutes.

*1. Moisture Loss*

The collective weight of the baked cookies was measured in order to calculate moisture loss when compared to the weight of the dough used to prepare those cookies. This calculation involved subtracting the post-baked collective cookie weight by the pre-baked dough weight and dividing the difference by the pre-baked cookie dough weight.

*2. Width, Thickness, and Spread Ratio*

Six cookies were laid edge-to-edge, and the width was measured. The cookies were then rotated 90° and re-measured, and the average width (W) was calculated. Next, six cookies were stacked vertically, and the height of the stack was measured. The cookies were re-stacked in a different order, and the stack height was re-measured. The average thickness (T) was calculated from these two measurements. After the average (W) and average (T) were determined, the spread ratio was calculated by dividing the average (W) by the average (T).

*3. Hardness and Fracturability*

Hardness and fracturability of the cookie was measured using a TA-XT2 texture analyzer equipped with a three-point bend apparatus. The trigger setting was "Auto 50.0 grams," and the tare mode was set to "auto." A probe was penetrated into a sample at a rate of 3 mm/second, for a total depth of 5 mm, while measuring the normal force in grams. The probe was then retracted at a rate of 10 mm/sec. The mean max force was the hardness of the sample, and the fracturability was the mean distance at break.

The results of all of the above testing are set forth in Table 10.

Table 10

| SAMPLE TESTED | SPREAD RATIO | MOISTURE LOSS | AVERAGE HARDNESS (g force) | AVERAGE FRACTURABILITY (mm) |
|---|---|---|---|---|
| Inventive Cookie | 1.67 | 5.0% | 4875 | 162 |
| Comparative Cookie[A] | 1.75 | 4.0% | 4844 | 161 |
| Identical to inventive cookie, except that the inventive shortening was replaced with a shortening comprising partially hydrogenated soybean oil ("PHSBO," ADM) and fully hydrogenated cottonseed oil ("FHCO," Cargill) at a weight ratio of 95:5 PHSBO:FHCO. | | | | |

The inventive plastic shortening produced a cookie with a slightly lower spread ratio and with slightly more moisture loss. The hardness and fracturability values for the inventive plastic shortening were very similar to the control. The inventive plastic shortening also produced a cookie with slightly less surface cracking and was slightly lighter in color than the control cookie.

EXAMPLE 10

Preparation of Pie Dough

All-purpose shortenings are incorporated into pie dough to shorten the texture so that the finished crust is flaky and has a short bite. As discussed above with respect to cookie dough in Example 9, there is competition for the flour surface between the aqueous phase and the fat during dough mixing. The aqueous phase interacts with the flour protein to create a gluten network that is cohesive and extensible. However, when the surface of the flour is coated with fat, absorption is reduced and a less cohesive gluten network is formed. This results in a shortened texture and desirable mouth feel.

A pie dough was prepared using the ingredients from Table 11. Refrigerated flour and the inventive shortening from Example 3 were combined with salt in a 5-quart Hobart mixer and mixed with a pie paddle on speed 1 until pea-to walnut-sized shortening lumps developed. The water was added, and mixing was continued on speed 1 for 75 seconds, until the dough was cohesive, while being careful not to over-mix the dough. No oiling out occurred, and there were no visible fat particles present. The dough was then refrigerated for 3.5 hours prior to rolling the dough into a 0.476 cm (3/16-inch) sheet. The dough was tender, and rounds of dough were cut using a 6.668 cm (2 5/8-inch) cookie cutter followed by baking at 218 °C (425 °F) for approximately 13 minutes. The inventive dough produced a desirable flaky crust with no off-flavors or odors.

Table 11

| INGREDIENT | GRAMS |
|---|---|
| Pastry Flour | 1,000.00 |
| Plastic Shortening Prepared in Example 3 | 450.00 |
| Water | 150.00 |
| Salt | 7.5 |

EXAMPLE 11

Preparation of Imitation Mozzarella Cheese

Sometimes referred to as analog cheese, imitation cheese is one of the many varieties of processed cheese based on the combination of casein with vegetable oil. It is often characterized by a longer shelf life and less cost than the corresponding cheese. It is marketed as blocks, slices, or grated, for a variety of applications, including toppings for pizzas, casseroles, etc. This application requires the shortening to structure the imitation cheese in order to prevent oiling out during storage and during post treatments such as grating or slicing.

*1. Cheese A*

The ingredients used to prepare this imitation cheese are set forth in Table 12. Water, phosphate salts, granular salt, starch, and carrageenan were added to a steam-jacketed, high sheer mixer followed by mixing to initiate hydration. While mixing, the rennet casein, coloring, and shortening prepared in Example 6 were added, and heating to a temperature of 90.5°C was initiated. Mixing was continued for 15 minutes after achieving this temperature, and the lactic acid, citric acid, and potassium sorbate were added during this mixing. Cooling was applied to the jacket to lower the product temperature to 79°C in order to allow packaging in poly-lined cartons. The product was then tempered in a controlled temperature environment of 4°C, where it was stored until use.

Table 12

| INGREDIENT | % BY WEIGHT[A] |
|---|---|
| Rennet Casein | 24.9 |
| Trisodium Phosphate | 1.1 |
| Disodium Phosphate | 1.6 |
| Granular Salt | 1.9 |
| Beta Carotene Coloring | added for desired color |
| Water | 41.8 |
| Shortening Prepared in Example 6 | 24.4 |
| Lactic Acid | 1.4 |
| Maize Waxy Starch | 2.0 |
| Kappa Carrageenan | 0.2 |
| Potassium Sorbate | 0.07 |
| Starter Distillate Flavor (mozzarella) | 0.6 |
| Citric Acid | to pH of 5.7 |
| [A] Based upon the total weight of all ingredients taken as 100% by weight. | |

The imitation cheese demonstrated good stability during packaging and after tempering. It also possessed good grating characteristics. The grated pieces were dry and firm with excellent toasting and melting properties.

*2. Cheese B*

This cheese was prepared in order to provide an approach that allows the manufacturer to receive and store fully refined salad oil at ambient temperatures. No pre-step would be required involving melting the inventive mono- and diglyceride product into oil using agitation and heat as discussed above. In this example, the oil and inventive mono- and diglycerides are added separately, thus allowing the mono- and diglycerides to solubilize into the oil *in situ* during the preparation of the imitation cheese where heating is applied to properly hydrate the ingredients such as the starch and carrageenan.

The ingredients used to prepare this imitation cheese B are set forth in Table 13. Water, phosphate salts, granular salt, starch, and carrageenan were added to a steam-jacketed, high sheer mixer followed by mixing to initiate hydration. While mixing, the rennet casein, coloring, soybean oil, and mono- and diglyceride preparation of Example 1 were added, followed by heating until a temperature of 90.5°C was achieved. Mixing was continued for 15 minutes after achieving this temperature, and the lactic acid, citric acid, and potassium sorbate were added during this mixing. Cooling was applied to the jacket to lower the product temperature to 79°C in order to allow packaging in poly-lined cartons. The product was then tempered in a controlled temperature environment of 4°C, where it was stored until use.

Table 13

| INGREDIENT | % BY WEIGHT[A] |
|---|---|
| Rennet Casein | 24.9 |
| Trisodium Phosphate | 1.1 |
| Disodium Phosphate | 1.6 |
| Granular Salt | 1.9 |
| Beta Carotene Coloring | added for desired color |
| Water | 41.8 |
| Fully Refined Soybean Oil[B] | 23.2 |
| Mono-and Diglycerides Prepared in Example 1 | 1.2 |
| Lactic Acid | 1.4 |
| Maize Waxy Starch | 2.0 |
| Kappa Carrageenan | 0.2 |
| Potassium Sorbate | 0.07 |
| Starter Distillate Flavor (mozzarella) | 0.6 |
| Citric Acid | to pH of 5.7 |
| [A] Based upon the total weight of all ingredients taken as 100% by weight. [B] Obtained from ADM. | |

The imitation cheese demonstrated good stability during packaging and after tempering. It also possessed good grating characteristics. The grated pieces were dry and firm with excellent toasting and melting properties. The nutritional declaration on a fat basis was as follows: saturates 21.2%; mono-unsaturates 17.9%; and polyunsaturates 60.9%. Thus, the product had an excellent polyunsaturate to saturate ratio (2.9:1).

EXAMPLE 12

Preparation of Frozen, Partially Fried Potatoes

French fries for retail and food service are distributed frozen in a partially (par) fried form with options such as different style cuts and seasonings. Fresh potatoes are peeled, cut, blanched to reduce sugars, dried, and fried for 1 to 2 minutes. After exiting the fryer, excess oil is removed by forced air. The fries are then optionally coated with various seasonings, subjected to blast freezing using sub-zero air, and packaged. This application requires the shortening to structure for retaining the seasoning and to a form a continuous barrier around the pieces in order to reduce the incidence of clumping. Clumping of the pieces will result in uneven frying.

The molten shortening prepared in Example 7 was placed in a fryer and heated to a temperature of 190.5°C. Potatoes were prepared by washing, peeling, slicing, and then frying for 2 minutes at 160C. After removing from the fryer, excess oil was removed by shaking intermittently for 1 minute. The fries were then transferred to a pan and placed in a blast freezer for 20 minutes followed by packaging into poly bags. The fries were then allowed to temper at -15°C for two days before evaluation. Evaluation of the frozen par fried potatoes demonstrated an acceptable level of clumping. Upon final frying for consumption, no discernable attributes could be observed.

EXAMPLE 13

Preparation of Puff Pastry

Puff pastry is a laminated, expanded, unleavened baked good that contains several discrete layers of roll-in margarine. The discrete layers of margarine cause the pastry to puff in the oven, resulting in an airy, crispy product. Puff pastry is best known for making turnovers, pastry shells, and creme horns.

The ingredients of Table 14 were mixed in a standard dough mixer for 1 minute at speed 1 followed by 5 minutes at speed 3. Dough temperatures were maintained between 20-22 °C (68-72 °F) after mixing. The mixed dough was rolled into a sheet with a thickness of approximately 3 mm. Next, 1,050.0 grams of the inventive roll-in margarine prepared in Example 8 was rolled to the same thickness and placed on the center area of one-half of the rolled dough. Outside strips of the dough were folded over the margarine, and the center seam was sealed. The dough was folded into thirds and re-rolled to 3 mm. The dough was then folded into fourths (book-fold) and again re-rolled to 3 mm. These steps (tri-fold followed by book-fold) were repeated twice to generate 128 fat layers. The layered dough was then cut into pieces that were approximately 10 inches x 15 inches. The individual pieces weighed 100 grams each.

These pieces were placed on a bakery sheet pan, covered with plastic, and frozen at -15°C for at least two hours. The dough was allowed to retard at room temperature for 30 minutes, and then baked at 191°C (375 °F) for 17 minutes. The puff pastry was removed from the oven and allowed to cool before the puff height is measured (Table 15).

Table 14

| INGREDIENT | GRAMS |
|---|---|
| Bread Flour | 1,500.0 |
| Monocalcium Phosphate | 11.3 |
| Salt | 11.3 |
| Roll-In Margarine Prepared in Example 8 | 150.0 |
| Water | 825.0 |

Table 15

| | PUFF HEIGHT (inches) |
|---|---|
| Inventive Puff Pastry | 3.80 |
| Comparative Puff Pastry[A] | 3.75 |

[A] A puff pastry identical to the inventive puff pastry except that the inventive margarine was substituted with a puff pastry margarine comprising a partially hydrogenated soybean oil (ADM).

The inventive puff pastry was equivalent to the commercially available puff pastry margarine that was tested. This demonstrates that the inventive margarine is equally functional to traditional puff pastry margarine.

EXAMPLE 14

Preparation of Danish Pastry

Danish is a laminated sweet pastry that is yeast leavened and has a flaky eating quality. The dough is laminated with roll-in margarine to produce discrete fat layers in the dough.

The ingredients of Table 16 were combined and mixed with a dough hook for 2 minutes on speed 1 before increasing to speed 2 for 8 minutes, while maintaining a dough temperature of 22°C (72 °F).

The dough was sheeted to a thickness of 8 mm using a two-way sheeter. Next, 25% by weight of the roll-in margarine (based upon the dough weight taken as 100% by weight) prepared in Example 8 was applied to 2/3 of the dough surface. The remaining dough was folded over in order to enclose the margarine between two layers of dough. The dough was than sheeted to a thickness of 8 - 10 mm. The dough piece was folded into thirds and again sheeted to a thickness of 8 -10 mm. The folding and sheeting was repeated two additional times and then folded in half and sheeted to achieve 54 discrete fat layers. The dough was then retarded in the refrigerator for 16 to 18 hours.

The retarded dough was sheeted to a width of 25-28 cm (10-11 inches) and a thickness of 10 mm. The dough was cut into 1.27 cm (1/2 inch) strips width-wise, which were twisted followed by curling into the final Danish shape (snail). The Danish was placed into a 90°F/85% relative humidity (RH) proofer for 45 to 60 minutes. Finally, the Danish was baked at 193 °C (380 °F) for 11 minutes and allowed to cool before packaging.

Table 16

| INGREDIENT | POUNDS |
|---|---|
| All-Purpose Flour | 4.0000 |
| Yeast | 0.2500 |
| Water | 2.0000 |
| Sugar | 1.0000 |
| Salt | 0.0625 |
| Non-Fat Dairy Milk | 0.2500 |
| Roll-In Margarine Prepared in Example 8 | 0.5000 |
| Flavor | 0.0156 |
| Eggs | 1.0000 |

The inventive roll-in margarine demonstrated good laminating qualities and excellent proofing tolerance. The finished product had a sweet flaky texture, which is normally associated with a Danish pastry.

EXAMPLE 15

Preparation of Donuts

A donut is a sweet, fried piece of dough or batter. The two main categories of donuts are yeast raised donuts and cake donuts. Donuts are fried in frying shortenings, and these shortenings must have a high oxidative stability to withstand the high temperatures (180°C) to which the shortenings are exposed.

A standard cake donut was prepared by Grupo Bimbo (Mexico) using the DONAS cake donut formulation.

The molten shortening prepared in Example 5 was added to the fryer and heated to a frying temperature of 180°C. Five donuts were added to the fryer with care to prevent the donuts from sticking together. Once the donuts were finished frying (45 seconds per side), they were allowed to cool before being liberally coated with cinnamon and sugar. The donuts were then packaged for further testing.

The donuts were tested three times during their 16-18 day shelf life for sensory analysis. Fat absorption, water activity, moisture content, hardness, and adhesiveness were also measured.

There were no obvious off-flavors or differences in texture between the donuts fried in the inventive molten shortening and the control, which was the same cake donut formula, but fried in partially hydrogenated soybean oil.

The donuts also did not demonstrate any differences in color when compared to the control, but the donuts fried in the inventive molten shortening did have less cinnamon and sugar adhering to their surface. Though not wishing to be bound by theory, this is believed to be due to the increase in crystallization temperature associated with the inventive shortening, which leaves less liquid oil on the surface of the donut. This difference could be eliminated by coating the donuts at a warmer temperature.

The fat absorption of both the inventive donuts and the control was also measured, using a gravimetric method. Specifically, the donut weight was determined, after which the fat was extracted from the donut using chloroform. The fat was then weighed in order to calculate the fat content. These results are given in Table 17. The total fat absorption was slightly higher in the inventive donuts, but the overall nutritional profile was improved when compared to the control.

The extracted fat was then methylated in order to produce fatty acid methyl esters, which were analyzed via gas chromatography to determine the fatty acid contents. These results are also shown in Table 17.

Table 17

| FAT | CONTROL | INVENTIVE DONUT |
|---|---|---|
| Total Fat Content | 20.49% | 21.61% |
| *Trans* Fatty Acid Content | 22.4% | 0.0% |
| Saturated Fatty Acid Content | 32.2% | 28.6% |
| Mono-unsaturated Fatty Acid Content | 55.7% | 21.9% |

*1. Water Activity*

The respective water activities of both the control and the inventive donuts were determined using a Decagon Aqualab Lite.

*2. Moisture Content*

The respective moisture contents of both the control and the inventive donuts were determined 12 days after frying. This was determined by first grinding up 5.0 grams of the donut, followed by heating at 160°C in an AND MX-50 Moisture Analyzer. The moisture loss was continuously measured until a loss of less than 0.02% by weight per minute was achieved. The moisture content was then calculated, using the total moisture loss obtained during this procedure.

*3. Texture Analysis*

A texture analysis of both the control and the inventive donuts was performed 12 days after frying using a TA-XT2 texture analyzer. The trigger setting was "Auto 5.0 grams." A 13-mm cylindrical probe was penetrated into a sample at a rate of 5 mm/second, for a total depth of 6 mm, while measuring the normal force in grams. The probe was then retracted at a rate of 5 mm/second (which gives adhesiveness). The test time was 5 seconds. The positive peak value was the hardness of the sample.
The results of the above testing are set forth in Table 18.

Table 18

| | CONTROL | INVENTIVE DONUT |
|---|---|---|
| Moisture Content | 28.59% | 27.21% |
| Water Activity | 0.854 | 0.855 |
| Hardness | 473 grams | 411 grams |
| Adhesiveness ($\pm$1 standard deviation) | -24.6$\pm$11.2 | -2.6$\pm$1.7 |

The two products had statistically equal hardness and adhesiveness values by texture analysis but the raw values show that the control donuts may have had higher adhesiveness. The two products had similar water activity levels, with the control having a slightly higher moister content.
Sensory analysis was also performed on the donuts over their shelf life of 16-18 days. Throughout the testing interval, an equal number of people preferred the donuts fried in the inventive shortening as preferred the control.

EXAMPLE 16

Preparation of Ready-To-Use Chocolate Icing

Icing can be used to decorate a variety of baked goods, including cakes, pastries, and donuts. The icing provides both texture and flavor to the baked product as well as a pleasing appearance to the eye. Ready-to-use (RTU) icings provide convenience to the end user. The fat in an icing must provide structure to the finished product as well as enhance the mouth feel and flavor release of the product.
The ingredients used to prepare the inventive icing are shown in Table 19. The molten shortening prepared in Example 7 was heated to 70°C and added to the remaining ingredients, which were pre-heated to 60°C. The ingredients were mixed before transferring to a hopper and pumped through a single-stage homogenizer set to 6.89 kPa (500 psig). After homogenization, the mixture was cooled by passing it through a two-barrel scraped surface heat exchanger, followed by a pin worker. The icing can be used immediately or packaged for later use.

The resulting icing was easily applied to baked goods and provided a nice mouth feel and good flavor release.

Table 19

| INGREDIENT | % BY WEIGHT[A] |
|---|---|
| Confectionary Sugar | 59.3500 |
| High Fructose Corn Syrup | 15.0000 |
| Molten Shortening Prepared in Example 7 | 16.0000 |
| Cocoa | 4.5000 |
| Water | 4.2000 |
| Polysorbate 60 | 0.5000 |
| Salt | 0.1000 |
| Lecithin | 0.1500 |
| Vanillin | 0.0500 |
| Citric Acid Solution (50%) | 0.1500 |
| [A] Based upon the total weight of all ingredients in the icing taken as 100% by weight. | |

Table 19

| INGREDIENT | % BY WEIGHT[A] |
|---|---|
| Confectionary Sugar | 59.3500 |
| High Fructose Corn Syrup | 15.0000 |
| Molten Shortening Prepared in Example 7 | 16.0000 |
| Cocoa | 4.5000 |
| Water | 4.2000 |
| Polysorbate 60 | 0.5000 |
| Salt | 0.1000 |
| Lecithin | 0.1500 |
| Vanillin | 0.0500 |
| Citric Acid Solution (50%) | 0.1500 |
| [A] Based upon the total weight of all ingredients in the icing taken as 100% by weight. | |

**Claims**

1. A method of reducing levels of unhealthy fats in a food while maintaining the structure of the food, said method comprising replacing a quantity of the unhealthy fats that would otherwise be present in the food with a structuring composition other than a margarine, said structuring composition comprising a fat system which includes a mixture of glycerides, wherein:

said structuring composition comprises at least 50% by weight diglycerides and from 1% to 5% by weight monoglycerides, based upon the total weight of glycerides in the composition taken as 100% by weight; and said fat system comprises at least 30% by weight β' crystals, based upon the total weight of crystals present in the fat system taken as 100% by weight.

2.  The method of claim 1, said glyceride mixture being the reaction product of glycerol and a vegetable oil, or of a glycerol and a fatty acid, said vegetable oil being selected from the group consisting of fully hydrogenated soybean oil, fully hydrogenated palm oil, fully hydrogenated palm stearin, fully hydrogenated coconut oil, fully hydrogenated canola oil, fully hydrogenated cottonseed oil, fully hydrogenated high erucic acid rapeseed oil, and mixtures of the foregoing.

3.  The method of claim 1, wherein said glyceride mixture has a fatty acid profile, and said fatty acid profile comprises at least 80% by weight saturated fatty acids, based upon the total weight of the glyceride mixture taken as 100% by weight.

4.  The method of claim 3, wherein said saturated fatty acids comprise palmitic acid and stearic acid.

5.  An edible product comprising:

    a non-hydrogenated vegetable oil; and
    a structuring composition other than a margarine, said structuring system comprising a fat system which includes a mixture of glycerides, wherein:

       said structuring composition comprises at least 50% by weight diglycerides and from 1% to 5% by weight monoglycerides, based upon the total weight of glycerides in the composition taken as 100% by weight; and said fat system comprises at least 30% by weight $\beta'$ crystals, based upon the total weight of crystals present in the fat system taken as 100% by weight.

6.  The edible product of claim 5, said fat system having an average crystallite size of less than 40 nm (400 Å).

7.  The edible product of claim 5, said glyceride mixture being the reaction product of glycerol and a vegetable oil, or of a glycerol and a fatty acid, said vegetable oil being selected from the group consisting of fully hydrogenated soybean oil, fully hydrogenated palm oil, fully hydrogenated palm stearin, fully hydrogenated coconut oil, fully hydrogenated canola oil, fully hydrogenated cottonseed oil, fully hydrogenated high erucic acid rapeseed oil, and mixtures of the foregoing.

8.  The edible product of claim 5, wherein said glyceride mixture has a fatty acid profile, and said fatty acid profile comprises at least 80% by weight saturated fatty acids, based upon the total weight of the glyceride mixture taken as 100% by weight.

9.  The edible product of claim 5, wherein said structuring composition further comprises a nonhydrogenated vegetable oil and is a shortening.

10. A method of reducing levels of unhealthy fats in a food while maintaining the structure of the food, said method comprising replacing a quantity of the unhealthy fats that would otherwise be present in the food with a structuring composition comprising a fat system which includes a mixture of glycerides, wherein:

       said structuring composition comprises at least 50% by weight diglycerides and from 1% to 5% by weight monoglycerides, based upon the total weight of glycerides in the composition taken as 100% by weight; and said fat system comprises from 75% to 100% by weight $\beta'$ crystals, based upon the total weight of crystals present in the fat system taken as 100% by weight.

11. The method of claim 10, said glyceride mixture being the reaction product of glycerol and a vegetable oil, or of a glycerol and a fatty acid, said vegetable oil being selected from the group consisting of fully hydrogenated soybean oil, fully hydrogenated palm oil, fully hydrogenated palm stearin, fully hydrogenated coconut oil, fully hydrogenated canola oil, fully hydrogenated cottonseed oil, fully hydrogenated high erucic acid rapeseed oil, and mixtures of the foregoing.

12. The method of claim 10, wherein said glyceride mixture has a fatty acid profile, and said fatty acid profile comprises at least 80% by weight saturated fatty acids, based upon the total weight of the glyceride mixture taken as 100% by weight.

13. An edible product comprising:

a non-hydrogenated vegetable oil; and
a structuring composition comprising a fat system which includes a mixture of glycerides, wherein:

said structuring composition comprises at least 50% by weight diglycerides and from 1% to 5% by weight monoglycerides, based upon the total weight of glycerides in the composition taken as 100% by weight; and said fat system comprises from 75% to 100% by weight $\beta'$ crystals, based upon the total weight of crystals present in the fat system taken as 100% by weight.

14. The edible product of claim 13, said glyceride mixture being the reaction product of glycerol and a vegetable oil, or of a glycerol and a fatty acid, said vegetable oil being selected from the group consisting of fully hydrogenated soybean oil, fully hydrogenated palm oil, fully hydrogenated palm stearin, fully hydrogenated coconut oil, fully hydrogenated canola oil, fully hydrogenated cottonseed oil, fully hydrogenated high erucic acid rapeseed oil, and mixtures of the foregoing.

15. The edible product of claim 13, wherein said glyceride mixture has a fatty acid profile, and said fatty acid profile comprises at least 80% by weight saturated fatty acids, based upon the total weight of the glyceride mixture taken as 100% by weight.

16. A method of forming a structuring composition, said method comprising:

heating a mixture to a temperature of from 60 °C to 72 °C to form a fat system, said mixture comprising:

a non-hydrogenated vegetable oil; and
a glyceride composition comprising at least 35% by weight diglycerides and from 1% to 5% by weight monoglycerides, based upon the total weight of the glyceride composition taken as 100% by weight;

and
cooling said fat system at a rate of from 35°C/minute to 45°C/minute to a temperature of from 26°C to 28°C to initiate crystal formation in the fat system and yield the structuring composition.

**Patentansprüche**

1. Verfahren zum Reduzieren von Mengen an ungesunden Fetten in einem Lebensmittel unter Beibehaltung der Struktur des Lebensmittels, bei dem das Verfahren ein Ersetzen einer Menge der ungesunden Fette, die ansonsten in dem Lebensmittel vorhanden wäre, durch eine strukturierende Zusammensetzung umfasst, die ein Fettsystem umfasst, das eine Mischung von Glyceriden umfasst, wobei
die strukturierende Zusammensetzung mindestens 50 Gew.-% Diglyceride und 1 Gew.-% bis 5 Gew.-% Monoglyceride umfasst, bezogen auf das als 100 Gew.-% angenommene Gesamtgewicht an Glyceriden in der Zusammensetzung, und
das Fettsystem mindestens 30 Gew.-% $\beta'$-Kristalle umfasst, bezogen auf das als 100 Gew.-% angenommene Gesamtgewicht an Kristallen in dem Fettsystem.

2. Verfahren nach Anspruch 1, bei dem die Glyceridmischung das Reaktionsprodukt von Glycerin und einem Pflanzenöl oder von einem Glycerin und einer Fettsäure ist, wobei das Pflanzenöl aus der Gruppe bestehend aus vollständig hydriertem Sojabohnenöl, vollständig hydriertem Palmöl, vollständig hydriertem Palmstearin, vollständig hydriertem Kokosnussöl, vollständig hydriertem Canolaöl, vollständig hydriertem Baumwollsamenöl, vollständig hydriertem, an Erucasäure reichem Rapssamenöl und Mischungen der zuvor Genannten ausgewählt ist.

3. Verfahren nach Anspruch 1, bei dem die Glyceridmischung ein Fettsäureprofil aufweist und das Fettsäureprofil mindestens 80 Gew.-% gesättigte Fettsäuren umfasst, bezogen auf das als 100 Gew.-% angenommene Gesamtgewicht an der Glyceridmischung.

4. Verfahren nach Anspruch 3, bei dem die gesättigten Fettsäuren Palmitin- und Stearinsäure umfassen.

5. Essbares Produkt, das umfasst:

nicht-hydriertes Pflanzenöl und

eine von Margarine verschiedene strukturierende Zusammensetzung, wobei das strukturierend System ein Fettsystem umfasst, das eine Mischung von Glyceriden enthält, wobei

die strukturierende Zusammensetzung mindestens 50 Gew.-% Diglyceride und 1 Gew.-% bis 5 Gew.-% Monoglyceride umfasst, bezogen auf das als 100 Gew.-% angenommene Gesamtgewicht an Glyceriden in der Zusammensetzung, und

das Fettsystem mindestens 30 Gew.-% $\beta$'-Kristalle umfasst, bezogen auf das als 100 Gew.-% angenommene Gesamtgewicht an Kristallen in dem Fettsystem.

6. Essbares Produkt nach Anspruch 5, bei dem das Fettsystem eine durchschnittliche Kristallitgröße von weniger als 40 nm (400 Å) aufweist.

7. Essbares Produkt nach Anspruch 5, bei dem die Glyceridmischung das Reaktionsprodukt von Glycerin und einem Pflanzenöl oder von einem Glycerin und einer Fettsäure ist, wobei das Pflanzenöl aus der Gruppe bestehend aus vollständig hydriertem Sojabohnenöl, vollständig hydriertem Palmöl, vollständig hydriertem Palmstearin, vollständig hydriertem Kokosnussöl, vollständig hydriertem Canolaöl, vollständig hydriertem Baumwollsamenöl, vollständig hydriertem, an Erucasäure reichem Rapssamenöl und Mischungen der zuvor Genannten ausgewählt ist.

8. Essbares Produkt nach Anspruch 5, bei dem die Glyceridmischung ein Fettsäureprofil aufweist und das Fettsäureprofil mindestens 80 Gew.-% gesättigte Fettsäuren umfasst, bezogen auf das als 100 Gew.-% angenommene Gesamtgewicht an der Glyceridmischung.

9. Essbares Produkt nach Anspruch 5, bei dem die strukturierende Zusammensetzung ferner nicht-hydriertes Pflanzenöl umfasst und ein Backfett ist.

10. Verfahren zum Reduzieren von Mengen an ungesunden Fetten in einem Lebensmittel unter Beibehaltung der Struktur des Lebensmittels, bei dem das Verfahren ein Ersetzen einer Menge der ungesunden Fette, die ansonsten in dem Lebensmittel vorhanden wäre, durch eine strukturierende Zusammensetzung umfasst, die ein Fettsystem umfasst, das eine Mischung von Glyceriden umfasst, wobei

die strukturierende Zusammensetzung mindestens 50 Gew.-% Diglyceride und 1 Gew.-% bis 5 Gew.-% Monoglyceride umfasst, bezogen auf das als 100 Gew.-% angenommene Gesamtgewicht an Glyceriden in der Zusammensetzung, und

das Fettsystem 75 bis 100 Gew.-% $\beta$'-Kristalle umfasst, bezogen auf das als 100 Gew.-% angenommene Gesamtgewicht an Kristallen in dem Fettsystem.

11. Verfahren nach Anspruch 10, bei dem die Glyceridmischung das Reaktionsprodukt von Glycerin und einem Pflanzenöl oder von einem Glycerin und einer Fettsäure ist, wobei das Pflanzenöl aus der Gruppe bestehend aus vollständig hydriertem Sojabohnenöl, vollständig hydriertem Palmöl, vollständig hydriertem Palmstearin, vollständig hydriertem Kokosnussöl, vollständig hydriertem Canolaöl, vollständig hydriertem Baumwollsamenöl, vollständig hydriertem, an Erucasäure reichem Rapssamenöl und Mischungen der zuvor Genannten ausgewählt ist.

12. Verfahren nach Anspruch 10, bei dem die Glyceridmischung ein Fettsäureprofil aufweist und das Fettsäureprofil mindestens 80 Gew.-% gesättigte Fettsäuren umfasst, bezogen auf das als 100 Gew.-% angenommene Gesamtgewicht an der Glyceridmischung.

13. Essbares Produkt, das umfasst:

nicht-hydriertes Pflanzenöl und

eine strukturierende Zusammensetzung, die ein Fettsystem umfasst, das eine Mischung von Glyceriden enthält, wobei

die strukturierende Zusammensetzung mindestens 50 Gew.-% Diglyceride und 1 Gew.-% bis 5 Gew.-% Monoglyceride umfasst, bezogen auf das als 100 Gew.-% angenommene Gesamtgewicht an Glyceriden in der Zusammensetzung, und

das Fettsystem 75 Gew.-% bis 100 Gew.-% $\beta$'-Kristalle umfasst, bezogen auf das als 100 Gew.-% angenommene Gesamtgewicht an Kristallen in dem Fettsystem.

14. Essbares Produkt nach Anspruch 13, bei dem die Glyceridmischung das Reaktionsprodukt von Glycerin und einem Pflanzenöl oder von einem Glycerin und einer Fettsäure ist, wobei das Pflanzenöl aus der Gruppe bestehend aus vollständig hydriertem Sojabohnenöl, vollständig hydriertem Palmöl, vollständig hydriertem Palmstearin, vollständig hydriertem Kokosnussöl, vollständig hydriertem Canolaöl, vollständig hydriertem Baumwollsamenöl, vollständig hydriertem, an Erucasäure reichem Rapssamenöl und Mischungen der zuvor Genannten ausgewählt ist.

15. Essbares Produkt nach Anspruch 13, bei dem die Glyceridmischung ein Fettsäureprofil aufweist und das Fettsäureprofil mindestens 80 Gew.-% gesättigte Fettsäuren umfasst, bezogen auf das als 100 Gew.-% angenommene Gesamtgewicht an der Glyceridmischung.

16. Verfahren zur Bildung einer strukturierenden Zusammensetzung, bei dem das Verfahren umfasst:

Erhitzen einer Mischung auf eine Temperatur von 60°C bis 72°C, um ein Fettsystem zu bilden, wobei die Mischung:

nicht-hydriertes Pflanzenöl und
eine Glyceridzusammensetzung umfasst, die mindestens 35 Gew.-% Diglyceride und 1 Gew.-% bis 5 Gew.-% Monoglyceride umfasst, bezogen auf das als 100 Gew.-% angenommene Gesamtgewicht an Glyceriden in der Zusammensetzung,

und
Kühlen des Fettsystems mit einer Rate von 35°C/min bis 45°C/min auf eine Temperatur von 26°C bis 28°C, um Kristallbildung in dem Fettsystem einzuleiten und die strukturierende Zusammensetzung zu erhalten.

## Revendications

1. Procédé de réduction de niveaux de mauvaises graisses dans un aliment tout en maintenant la structure de l'aliment, ledit procédé comprenant de remplacer une certaine quantité des mauvaises graisses qui, sinon, seraient présentes dans l'aliment, par une composition structurante autre que la margarine, ladite composition structurante contenant un système gras qui inclut un mélange de glycérides, où :

ladite composition structurante contenant au moins 50 % en poids de diglycérides et de 1 à 5 % en poids de monoglycérides, rapportés au poids total de glycérides dans la composition prise comme 100 % en poids ; et ledit système gras contenant au moins 30 % en poids de cristaux $\beta'$ rapporté au poids total de cristaux présents dans le système gras pris comme 100 % en poids.

2. Procédé selon la revendication 1, ledit mélange de glycérides étant le produit de réaction du glycérol et d'une huile végétale, ou du glycérol et d'un acide gras, ladite huile végétale étant choisie dans le groupe constitué d'huile de soja totalement hydrogénée, d'huile de palme totalement hydrogénée, de stéarine de palme totalement hydrogénée, d'huile de noix de coco totalement hydrogénée, d'huile de canola totalement hydrogénée, d'huile de coton totalement hydrogénée, d'huile de colza totalement hydrogénée à haute teneur en acide érucique, et de leurs mélanges.

3. Procédé selon la revendication 1, dans lequel ledit mélange de glycérides a un profil d'acides gras, et ledit profil d'acides gras comprend au moins 80 % en poids d'acides gras saturés, rapporté au poids total du mélange de glycérides pris comme 100 % en poids.

4. Procédé selon la revendication 3, dans lequel lesdits acides gras saturés comprennent de l'acide palmitique et de l'acide stéarique.

5. Produit comestible contenant :

une huile végétale non-hydrogénée ; et
une composition structurante autre que la margarine, ladite composition structurante contenant un système gras qui inclut un mélange de glycérides :

ladite composition structurante contenant au moins 50 % en poids de diglycérides et de 1 à 5 % en poids de monoglycérides, rapportés au poids total de glycérides dans la composition prise comme 100 % en poids ; et
ledit système gras contenant au moins 30 % en poids de cristaux $\beta'$ rapporté au poids total de cristaux présents dans le système gras pris comme 100 % en poids.

6. Produit comestible selon la revendication 5, ledit système gras ayant une taille de cristallite moyenne inférieure à 40 nm (400 Å).

7. Produit comestible selon la revendication 5, ledit mélange de glycérides étant le produit de réaction du glycérol et d'une huile végétale, ou du glycérol et d'un acide gras, ladite huile végétale étant choisie dans le groupe constitué d'huile de soja totalement hydrogénée, d'huile de palme totalement hydrogénée, de stéarine de palme totalement hydrogénée, d'huile de noix de coco totalement hydrogénée, d'huile de canola totalement hydrogénée, d'huile de coton totalement hydrogénée, d'huile de colza totalement hydrogénée à haute teneur en acide érucique, et de leurs mélanges.

8. Produit comestible selon la revendication 5, dans lequel ledit mélange de glycérides a un profil d'acides gras, et ledit profil d'acides gras comprend au moins 80 % en poids d'acides gras saturés, rapporté au poids total du mélange de glycérides pris comme 100 % en poids.

9. Produit comestible selon la revendication 5, dans lequel ladite composition structurante comprend en outre une huile végétale non-hydrogénée et est une graisse végétale.

10. Procédé de réduction de niveaux de mauvaises graisses dans un aliment tout en maintenant la structure de l'aliment, ledit procédé comprenant de remplacer une certaine quantité des mauvaises graisses qui, sinon, seraient présentes dans l'aliment, par une composition structurante comprenant un système gras qui inclut un mélange de glycérides, où :

ladite composition structurante contenant au moins 50 % en poids de diglycérides et de 1 à 5 % en poids de monoglycérides, rapportés au poids total de glycérides dans la composition prise comme 100 % en poids ; et ledit système gras contenant 75 à 100 % en poids de cristaux β' rapporté au poids total de cristaux présents dans le système gras pris comme 100 % en poids.

11. Procédé selon la revendication 10, ledit mélange de glycérides étant le produit de réaction du glycérol et d'une huile végétale, ou du glycérol et d'un acide gras, ladite huile végétale étant choisie dans le groupe constitué d'huile de soja totalement hydrogénée, d'huile de palme totalement hydrogénée, de stéarine de palme totalement hydrogénée, d'huile de noix de coco totalement hydrogénée, d'huile de canola totalement hydrogénée, d'huile de coton totalement hydrogénée, d'huile de colza totalement hydrogénée à haute teneur en acide érucique, et de leurs mélanges.

12. Procédé selon la revendication 10, dans lequel ledit mélange de glycérides a un profil d'acides gras, et ledit profil d'acides gras comprend au moins 80 % en poids d'acides gras saturés, rapporté au poids total du mélange de glycérides pris comme 100 % en poids.

13. Produit comestible contenant :

une huile végétale non-hydrogénée ; et
une composition structurante comprenant un système gras qui inclut un mélange de glycérides, où ladite composition structurante contenant au moins 50 % en poids de diglycérides et de 1 à 5 % en poids de monoglycérides, rapportés au poids total de glycérides dans la composition prise comme 100 % en poids ; et ledit système gras contenant 75 à 100 % en poids de cristaux β' rapporté au poids total de cristaux présents dans le système gras pris comme 100 % en poids.

14. Produit comestible selon la revendication 13, ledit mélange de glycérides étant le produit de réaction du glycérol et d'une huile végétale, ou du glycérol et d'un acide gras, ladite huile végétale étant choisie dans le groupe constitué d'huile de soja totalement hydrogénée, d'huile de palme totalement hydrogénée, de stéarine de palme totalement hydrogénée, d'huile de noix de coco totalement hydrogénée, d'huile de canola totalement hydrogénée, d'huile de coton totalement hydrogénée, d'huile de colza totalement hydrogénée à haute teneur en acide érucique, et de leurs mélanges.

15. Produit comestible selon la revendication 13, dans lequel ledit mélange de glycérides a un profil d'acides gras, et ledit profil d'acides gras comprend au moins 80 % en poids d'acides gras saturés, rapporté au poids total du mélange de glycérides pris comme 100 % en poids.

16. Procédé de formation d'une composition structurante, ledit procédé comprenant de :

chauffer un mélange à une température entre 60°C et 72°C pour former un système gras, ledit mélange comprenant :

une huile végétale non-hydrogénée ; et
une composition de glycéride contenant au moins 35 % en poids de diglycérides et de 1 à 5 % en poids de monoglycérides ; rapportés au poids total de la composition de glycérides prise comme 100 % en poids ; et

refroidir ledit système gras à une vitesse de 35°C/min à 45°C/min jusqu'à une température de 26°C à 28°C pour initier la formation de cristaux dans le système gras et produire la composition structurante.

**EP 2 509 432 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070148312 A

- US 2007148312 A1